## Europäisches Patentamt
## European Patent Office
## Office européen des brevets

(11) Veröffentlichungsnummer: **0 073 423**
**B1**

# (12) EUROPÄISCHE PATENTSCHRIFT

(45) Veröffentlichungstag der Patentschrift:
**04.12.85**

(21) Anmeldenummer: **82107587.6**

(22) Anmeldetag: **19.08.82**

(51) Int. Cl.⁴: **H 01 R 4/70**

(54) **Verbindungselement für vollfeststoffisolierte Stromleiter.**

(30) Priorität: **20.08.81 DD 232695**

(43) Veröffentlichungstag der Anmeldung:
**09.03.83 Patentblatt 83/10**

(45) Bekanntmachung des Hinweises auf die Patenterteilung:
**04.12.85 Patentblatt 85/49**

(84) Benannte Vertragsstaaten:
**AT CH DE FR LI NL SE**

(56) Entgegenhaltungen:
**DD - A - 52 449**
**DD - A - 60 081**
**DD - A - 82 981**
**DE - B - 1 027 759**
**DE - B - 1 295 052**
**FR - A - 1 224 522**
**FR - A - 2 335 970**
**FR - A - 2 353 968**
**US - A - 3 430 799**

(73) Patentinhaber: **VEB "Otto Buchwitz"**
**Starkstrom-Anlagenbau Dresden, Industriegelände**
**Postschliessfach 360, DDR-8060 Dresden (DD)**

(72) Erfinder: **Böhme, Klaus, Dr.-Ing., Bodenbacher**
**Strasse 135a, DDR-8045 Dresden (DD)**
Erfinder: **Seibt, Günter, Ho-Chi-Minh-Strasse 14,**
**DDR-8010 Dresden (DD)**
Erfinder: **Sieber, Klaus, Dr.-Ing., Semperstrasse 17,**
**DDR-8020 Dresden (DD)**

(74) Vertreter: **Patentanwälte Beetz sen. - Beetz jun. Timpe -**
**Siegfried - Schmitt-Fumian, Steinsdorfstrasse 10,**
**D-8000 München 22 (DE)**

BUNDESDRUCKEREI BERLIN

**Beschreibung**

Die Erfindung bezieht sich auf ein Verbindungselement für vollfeststoffisolierte Stromleiter und ist für eine stromtragfähige Verbindung mit großem elektrischen Isoliervermögen zwischen vollfeststoffisolierten Leiter- und Anlagenteilen in Hochspannungsschalt- und -verteileranlagen bestimmt. Des weiteren besteht die Möglichkeit, sie in oder an autonomen elektrotechnischen Geräten einzusetzen.

Es ist bekannt, in vollfeststoffisolierten Hochspannungsschalt- und -verteileranlagen die Stromschienen und Geräte der Hauptstrombahn, welche mit einer isolierenden Umhüllung aus festem Isolierstoff mit äußerer Schirmung, beispielsweise mit geerdetem leitfähigem Belag, versehen sind, über lösbare Verbindungselemente zu kuppeln und zusammenzufügen. Dabei wird das erforderliche Isoliervermögen derartiger vollfeststoffisolierter Verbindungselemente erreicht, indem zwischen den vollfeststoffisolierten Stromschienen oder Geräten entstehende Fugen mit Isolierstoff höherer elektrischer Festigkeit durch Verspannen elastischer Isolierstoffkörper elektrisch abgedichtet werden (DD-A-52 449).

Des weiteren ist aus der DD-A-82 981 ein radial montierbarer, zwischen zwei Fixpunkten angeordneter feststoffisolierter Leiterzug, insbesondere eine Sammelschiene für Hochspannungsschaltanlagen, bekannt, welche aus der Kombination eines lösbaren elastischen Verbindungselements, eines lösbaren starren Verbindungselements und einem dazwischen angeordneten starren feststoffisolierten Leiter besteht. Die Leiterenden sind als Zapfen ausgebildet und von einzelnen zu einem Hohlzylinder zusammengesetzten axial verschiebbaren Kontaktsegmenten umgeben, wobei der erforderliche Kontaktdruck durch einen zwischen den Isolierungen der Leiterenden verspannten Isolierstoffring erzeugt wird.

Weiterhin ist ein Verbindungselement für feststoffisolierte starre Leiter, insbesondere Sammelschienen, bekannt, bei dem beiderseits in den stirnseitig ausgebohrten Leiterenden gefederte Preßkegel vorgesehen sind, die über eine geschlitzte Kontakthülse die elektrische Verbindung der stromführenden Leiter herstellen. Zwischen den Feststoffisolierungen der Leiter ist ein elastischer Isolierstoffring angeordnet, der von zwei Begrenzungsringen gefaßt ist. Die Verbindungsstelle ist mittels an der Feststoffisolierung angeordneter Ringfedern, metallischer Gewinderinge und einer metallischen Gewindehülse verspannt (DD-A-60 081). Diese für die Übertragung hoher Ströme geeigneten Kupplungen der vollfeststoffisolierten Stromleiterenden bzw. Geräteanschlüsse können nicht hergestellt und geprüft werden, bevor die Fugen zur Erreichung des erforderlichen elektrischen Isoliervermögens durch Verspannen abgedichtet sind.

Da bei den bekannten Lösungen nach der Abdichtung der Luftfuge der Zugang zu den Stromleiterenden nicht möglich und während des Abdichtungsvorganges der Zugang mit Werkzeug zu den Stromleiterenden räumlich sehr beschränkt ist, scheiden in der praktischen Anwendung die für die Erreichung eines niedrigen Kontaktübergangswiderstandes besonders geeigneten Verbindungsverfahren wie Verschrauben, Verpressen, Verlöten, Verschweißen und Verbinden durch Klemmstücke aus.

Vielmehr muß auf die zur Stromübertragung ungünstigere Anordnung von durch Federkraft angedrückten Kontaktlamellen oder -segmenten zurückgegriffen werden. Dabei ist es unerheblich, ob die Kontaktkraft statt von Federn durch verspannte elastische Kunststoffe (DD-A-82 981) erzeugt wird. So wird, z. B. gemäß der DD-PS 60 081, die Kontaktkraft aus der Verspannung bei der Fugenabdichtung erzeugt. Abgesehen davon, daß die tatsächliche wirkende Kontaktkraft und die räumliche Lage der Verbindungselemente wegen der unvermeidlichen Toleranzen der Einzelteile nicht mehr kontrollierbar ist, besteht die Gefahr, daß die Verspannung zwar ein ausreichendes Isoliervermögen der Fugenabdichtung garantiert, jedoch dabei die Kontaktkräfte zur Stromübertragung nicht im erforderlichen Maß erzeugt werden. Auch bei Wärmespielen der vollfeststoffisolierten Stromschienen verändert sich die Verspannung und damit der Kontaktdruck in unkontrollierbarem Umfang. Dies wird auch bei der Lösung des radial montierbaren feststoffisolierten Leiterzugs (DD-A-82 981) nicht vermieden, da auch hier die Kontaktkraft der Lamellen erst durch die Verspannung bei der Abdichtung der Fugen erzeugt wird. Die bekannten Verbindungselemente können auch nur mit zwei Stromleiterenden in einer Achse, nicht aber mit Abwinkelungen oder Verzweigmuffen montiert werden.

Dies gilt nur eingeschränkt bei einer Schaltanlage für hohe Betriebsspannung mit phasenweiser vollisolierender Kapselung der Sammelschienenteilstücke und Abzweigleitungen, wo die ausschließlich in festem Isolierstoff eingebetteten Sammelschienenteilstücke und Abzweigleitungen unter Entstehung von elektrischen Fugen in ein aus Isolierkunststoff von gewisser Elastizität bestehendes Abzweiggehäuse eingeführt sind, in welchem die Sammelschienenteilstücke untereinander und mit den Abzweigleitungen durch an einem Verbindungselement angeordnete federnde Ringkontakte elektrisch verbunden sind (DE-B-1 295 052). Zur Verteilung des elektrischen Feldes ist in dem elastischen Abzweiggehäuse eine elastische Schirmelektrode eingebettet. Das elastische Abzweiggehäuse dient insbesondere dem Zweck, die Längsausdehnung der Stromschienen bei Erwärmung zu kompensieren. Abgesehen von der technologisch äußerst schwierigen Realisierbarkeit eines solchen elastischen Abzweiggehäuses wird hierbei die stromtragfähige Verbindung erst durch die Abdichtung der Fugen geschaffen. Ferner ist der von den unvermeidlichen Toleranzen und vom Versatz abhängige Sitz der Kontaktelemente und deren Kontaktkraft nicht mehr kontrollierbar, und es können nur die für die Übertragung hoher Ströme ungünstigeren bzw. aufwendigeren federnden Ringkontakte eingesetzt werden. Demzufolge können die zur Erhöhung der Stromtragfähigkeit und der Verringerung des Kontaktübergangswiderstandes geeigneten Verbindungsverfahren, wie z. B. Verschrauben, Verpressen, Verschweißen, nicht angewandt werden. Außerdem ist dieses Verbindungselement nicht für alle Arten von Abzweigleitungen anwendbar.

Wartungs- und Reparaturarbeiten sind ferner an der Verbindung nur nach Demontage der gesamten Sammelschienen- und Abzweigschienenanordnung möglich.

Die Erfindung, wie sie im Anspruch 1 gekennzeichnet ist, löst die Aufgabe, ein Verbindungselement für vollfeststoffisolierte Stromleiter in Form eines vollfeststoffisolierten Hohlkörpers, der mit einer Schirmung versehen ist und in welchem mindestens zwei Stromleiter-Einführungsöffnungen angeordnet sind, zu schaffen, bei der die Stromtragfähigkeit vor dem Abdichten des Verbindungselements herstellbar und kontrollierbar ist, und der Sitz der Kontaktverbindung sowie deren Kontaktkraft bzw. Kontaktübergangswiderstand unabhängig von der Verspannung bei der Fugenabdichtung bei Erreichung eines ausreichenden Isoliervermögens der Verbindungsstelle überprüft werden kann.

Der Erfindung liegt weiterhin die Aufgabe zugrunde, die Verbindung versetzter oder abzweigender Stromleiter zu ermöglichen.

Im folgenden wird die Erfindung anhand von Ausführungsbeispielen und der Zeichnungen erläutert.

In den Zeichnungen zeigen jeweils im Längsschnitt:

Fig. 1 ein Verbindungselement für gleichachsige vollfeststoffisolierte Stromleiter;

Fig. 2 ein Verbindungselement für im Winkel angeordnete vollfeststoffisolierte Stromleiter;

Fig. 3 ein Verbindungselement für T-förmig angeordnete vollfeststoffisolierte Stromleiter und

Fig. 4 ein Verbindungselement für dreidimensional angeordnete vollfeststoffisolierte Stromleiter.

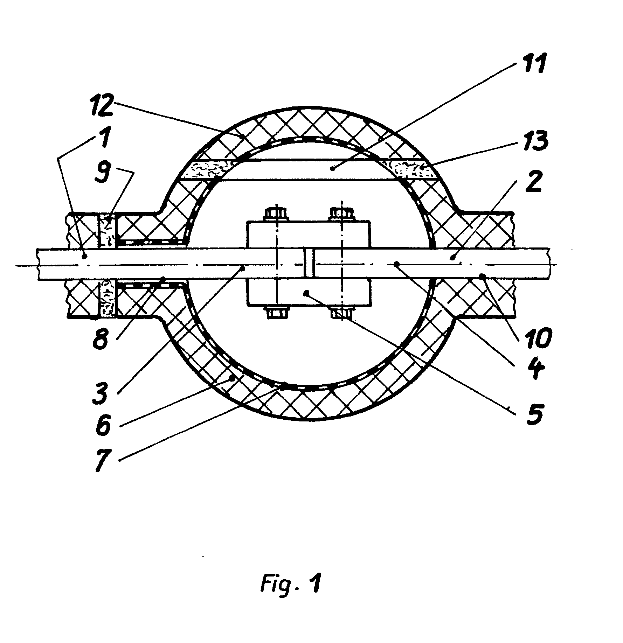

In Fig. 1 ist ein Verbindungselement für zwei vollfeststoffisolierte Stromleiter 1, 2 oder entsprechende Geräte dargestellt, deren Stromleiterenden 3, 4 etwa in einer Achse liegen. Beide Stromleiterenden 3, 4 etwa in einer Achse liegen. Beide Stromleiterenden 3, 4 sind durch eine stromtragfähige Kontaktverbindung 5 miteinander gekoppelt, welche in einem vollfeststoffisolierten, starr ausgebildeten Hohlkörper 6 angeordnet ist, dessen innere Oberfläche mit einer auf dem Potential der beiden Stromleiterenden 3, 4 liegenden Schirmung 7 versehen ist. Der Hohlkörper 6 kann außer der dargestellten Kugelform auch jede andere geeignete geometrische Form aufweisen. Die stromtragfähige Kontaktverbindung 5 ist vorzugsweise eine geschraubte Klemmverbindung; es kann jedoch auch jede andere geeignete kraft-, stoff- oder formschlüssige Verbindung Anwendung finden. Der vollfeststoffisolierte Hohlkörper 5 besitzt eine als Durchstecköffnung ausgebildete Stromleiter-Einführungsöffnung 8, durch welche das Stromleiterende 3 des von links kommenden Stromleiters 1 durchgesteckt ist. Dieser Stromleiter 1 ist mit Hilfe eines verspannten elastischen Kompensators 9, welcher Wärmespiele aufnimmt und gleichzeitig als elektrische Fugenabdichtung dient, am Hohlkörper 6 angeordnet. Gleichermaßen können andere Mittel der Fugenabdichtung verwendet werden. Das von rechts kommende Stromleiterende 4 ist vorzugsweise stoffschlüssig in einer zweiten Stromleiter-Einführungsöffnung 10 fest eingebettet, wobei der vollfeststoffisolierte Stromleiter 2 und der Hohlkörper 6 körperlich eine Einheit bilden.

Der Hohlkörper 6 ist außerdem mit einer Montageöffnung 11 für den Zugang zur Herstellung und Prüfung der stromtragfähigen Kontaktverbindung 5 versehen, die mit einem abnehmbaren Deckel 12 und einer Fugenabdichtung 13 verschlossen und elektrisch abgedichtet ist. Anstelle des Deckels 12 können gleichermaßen der Verschluß und die elektrische Abdichtung der Montageöffnung 11 durch andere geeignete Isolierstoffkörper erfolgen. Durch die Montageöffnung 11 wird gewährleistet, daß die Herstellung und nachfolgende Prüfung der stromtragfähigen Kontaktverbindung 5 der Stromleiterenden 3, 4 von außen vorgenommen werden kann, bevor das Verbindungselement elektrisch abgedichtet wird, so daß kein maßgeblicher Einfluß der Fugenabdichtung 13 der Montageöffnung 11 auf die Stromtragfähigkeit der Kontaktverbindung 5 der Stromleiterenden 3, 4 auftritt.

Das erfindungsgemäße Verbindungselement ist in Abhängigkeit von der räumlichen Anordnung sowie der Anzahl der Stromleiter bzw. der Abzweigleitungen variierbar.

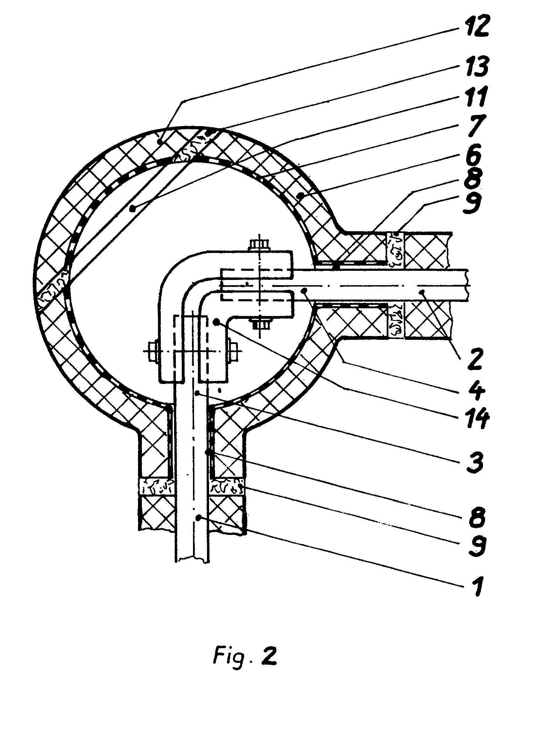

Fig. 2 zeigt eine für winklig angeordnete Stromleiter geeignete Ausführung des Verbindungselements. Die Stromleiterenden 3, 4 sind winklig versetzt in den vollfeststoffisolierten und mit der Schirmung 7 versehenen Hohlkörper 6 eingeführt und durch eine stoffschlüssige Verbindung 14 gekuppelt. Die elektrisch abgedichtete Montageöffnung 11 ist im Hinblick auf die für stoffschlüssige Verbindungsverfahren erforderliche großvolumige Zugänglichkeit so ausgeführt, daß der Deckel 12 die dazu erforderliche Größe besitzt.

Beide Stromleiter-Einführungsöffnungen 8 sind als Durchstecköffnungen ausgebildet. Zur elektrischen Abdichtung sowie zur Aufnahme des Wärmespiels der beiden durchgesteckten Stromleiterenden 3, 4 ist zwischen dem Hohlkörper 6 und der Vollfeststoffisolierung der Stromleiter 1, 2 je ein Kompensator 9 angeordnet. Es ist auch möglich, die Stromleiterenden 3, 4 der vollfeststoffisolierten Stromleiter 1, 2 oder entsprechender Geräte fest in die Stromleiter-Einführungsöffnungen einzubetten.

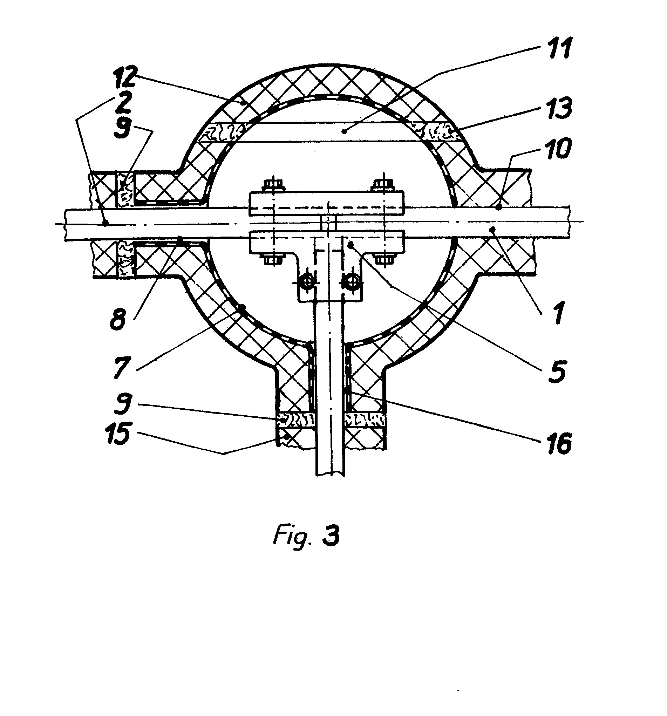

Das Verbindungselement gemäß Fig. 3 ist für eine T-förmige Stromleiterverbindung ausgelegt. Mit den gleichachsig verbundenen vollfeststoffisolierten Stromleitern 1, 2 ist ein dritter, im Winkel zu ihnen angeordneter vollfeststoffisolierter Stromleiter 15 gekuppelt. Dementsprechend ist der vollfeststoffisolierte, mit der Schirmung 7 versehene Hohlkörper 6 mit einer dritten Stromleiter-Einführungsöffnung 16 versehen, wobei vorteilhafterweise zwei der Stromleiter-Einführungsöffnungen 8, 16 als Durchstecköffnungen und eine Stromleiter-Einführung 10 mit fest eingebettetem Stromleiter 1 ausgebildet sind. Das Volumen des Deckels 12 der Montageöffnung 11 entspricht in etwa dem des Verbindungselements von Fig. 1.

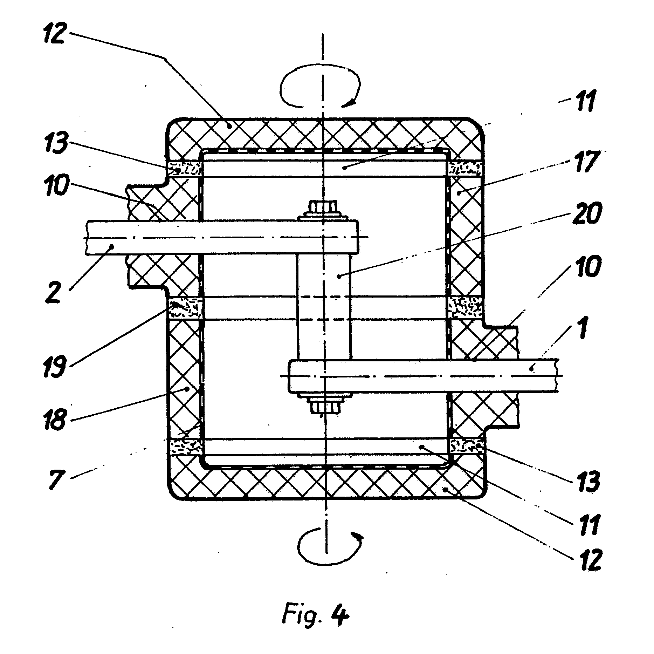

Für eine dreidimensionale Verbindung vollfeststoffisolierter Stromleiter und/oder vollfeststoffisolierter Geräte ist die in Fig. 4 dargestellte Variante des erfindungsgemäßen Verbindungselements vorgesehen. Der vollfeststoffisolierte, mit der Schirmung 7 versehene Hohlkörper besteht aus zwei miteinander verbundenen Teilhohlkörpern 17 und 18. Die beiden vorzugsweise zylindrisch geformten Teilhohlkörper 17, 18 sind mittels eines elastischen, elektrisch abdichtenden Kompensators 19 drehbar zusammengefügt. Jeder der Teilhohlkörper 17, 18 ist mit der Montageöffnung 11 versehen, welche mit dem Deckel 12 und der Fugenabdichtung 13 elektrisch abgedichtet sind. Die Stromleiter-Einführungsöffnung eines jeden Teilhohlkörpers 17, 18 ist vorzugsweise stoffschlüssig mit der Vollfeststoffisolierung des Stromleiters 1, 2 und dessen Stromleiterenden 3, 4 verbunden, so daß sie eine körperliche Einheit bilden. Die Stromleiter-Einführungsöffnungen 10 können aber auch als Durchstecköffnungen ausgebildet sein. Die beiden Stromleiterenden sind durch eine stromtragfähige kraftschlüssige Verbindung 20 miteinander gekuppelt, welche die erforderliche Drehbewegung der Teilhohlkörper 17, 18 und somit der Stromleiter 1, 2 und/oder sprechender Geräte ermöglicht.

Die erfindungsgemäße Ausführung des Verbindungselements als starrer Hohlkörper ermöglicht die Anwendung für die Übertragung hoher Ströme geeigneter kraft-, form- oder stoffschlüssiger Verbindungen für vollfeststoffisolierte Stromleiter, wie Schraub-, Preß-, Löt-, Schweiß- und Klemmverbindungen.

Die Herstellung der stromtragfähigen Verbindung der Stromleiterenden wird bei geöffnetem Deckel durch die Montageöffnung vorgenommen. Nach erfolgter Herstellung der stromtragfähigen Verbindung wird die Montageöffnung durch den Deckel geschlossen und mittels der Fugenabdichtung elektrisch abgedichtet. Die elektrische Abdichtung der Durchstecköffnung sowie des Deckels ist ohne maßgeblichen Einfluß auf die Stromtragfähigkeit, d. h. auf den Kontaktdruck und den Kontaktwiderstand.

Außerdem erlaubt das erfindungsgemäße Verbindungselement, eventuell notwendige Revisionen, Wartungsarbeiten und anfallende Reparaturen auf einfache Art und Weise durchzuführen.

## Patentansprüche

1. Verbindungselement für vollfeststoffisolierte Stromleiter (1, 2) auf der Basis eines elektrisch isolierenden Hohlkörpers (6), der aufweist:

— zwei Stromleiter-Einführungsöffnungen (8, 10), in denen jeweils ein Stromleiter (1, 2) in den Hohlkörper (6) eingeführt ist,
— eine stromtragfähige Kontaktverbindung (5), die die Stromleiterenden (3, 4) elektrisch verbindet, und
— eine auf der Innenoberfläche vorgesehene elektrisch leitende, auf dem Potential der Stromleiterenden (3, 4) liegende Schirmung (7),

dadurch gekennzeichnet, daß

(a) der Hohlkörper (6)
   — im wesentlichen starr ausgebildet ist,
   — Stromleiter-Einführungsöffnungen (8, 10), aufweist, die
      — als Durchstecköffnungen (8), durch die der Stromleiter (1) durchgesteckt ist, und/oder
      — als Einführungen (10) mit fest eingebettetem Stromleiter (2) ausgeführt sind, und
   — mindestens eine Montageöffnung (11) aufweist, die
      — mit einem abnehmbaren Deckel (12) und
      — einer Fugenabdichtung (13) elektrisch dicht verschließbar ist,
   und
(b) die stromtragfähige Kontaktverbindung (5) kraft-, form- oder stoffschlüssig ausgebildet ist (Fig. 1).

2. Verbindungselement nach Anspruch 1, dadurch gekennzeichnet, daß bei als Durchstecköffnungen (8) ausgebildeten Stromleiter-Einführungsöffnungen zwischen dem Hohlkörper (6) und der Feststoffisolierung des Stromleiters (1) ein verspannter elastischer und elektrisch abdichtender Kompensator (9) vorgesehen ist.

3. Verbindungselement nach Anspruch 1 oder 2, dadurch gekennzeichnet, daß die Stromleiter-Einführungsöffnungen (8, 10) axial versetzt oder winklig zueinander angeordnet sind.

4. Verbindungselement nach einem der Ansprüche 1 bis 3, dadurch gekennzeichnet, daß der Hohlkörper (6) für dreidimensionale Verbindungen als Teilhohlkörper (17) ausgebildet und mit mindestens einem weiteren Teilhohlkörper (18) drehbar verbunden ist, wobei zwischen den benachbarten Teilhohlkörpern (17, 18) ein elastischer, elektrisch abdichtender Kompensator (19) angeordnet ist (Fig. 4).

5. Verbindungselement nach Anspruch 4, dadurch gekennzeichnet, daß zwei Teilhohlkörper (17, 18) vorgesehen sind, die jeweils eine Montageöffnung (11) aufweisen, die mit einem Deckel (12) und einer Fugenabdichtung (13) elektrisch abgedichtet sind, und jeweils einer der Stromleiter (1, 2) fest in der Stromleiter-Einführungsöffnung (10) eines der Teilhohlkörper (17, 18) eingebettet ist (Fig. 4).

**Claims**

1. A connecting element for conductors (1, 2) with solid dielectric on the basis of an electrically insulating hollow body (6) which comprises:

— two conductor inlet ports (8, 10) in which a respective conductor (1, 2) is inserted into the hollow body (6),
— a contact connection (5) capable of carrying current for electrically connecting the conductor ends (3, 4), and
— an electrically conductive shielding (7) provided on the inner surface and having the potential of the conductor ends (3, 4),

characterised in that

(a) the hollow body (6)
    — is substantially rigid,
    — is provided with conductor inlet ports (8, 10) which
        — are bushing ports (8) through which the conductor (1) is inserted, and/or
        — inlets (10) with fixedly embedded conductor (2), and
    — is provided with at least one mounting aperture (11) which
        — is adapted to be electrically sealed with a removable cover (12) and
        — with a joint packing (13),
    and
(b) the current-carrying contact connection (5) is a frictional conneciton, a form fit, or a material fit (Fig. 1).

2. A connecting element as claimed in claim 1, characterised in that, when the conductor inlet ports are bushing ports (8), a deformed elastic und electrically sealing compensating member (9) is provided between the hollow body (6) and the solid dielectric of the conductor (1).

3. A connecting element as claimed in claim 1 or claim 2, caracterised in that the conductor inlet ports (8, 10) are disposed with an axial offset or at an angle relative to each other.

4. A connecting element as claimed in any of the claims 1 to 3, characterised in that for three-dimensional connections the hollow body (6) is configured as a hollow body portion (17) and is rotatably connected to at least a further hollow body portion (18), an elastic, electrically sealing compensating member (19) being disposed between the adjacent hollow body portions (17, 18) (Fig. 4).

5. A connecting element as claimed in claim 4, characterised in that two hollow body portions (17, 18) are provided each having a mounting aperture (11) electrically sealed by means of a cover (12) and a joint packing (13), and that a respective one of the conductors (1, 2) is fixedly embedded in the conductor inlet port (10) of one of the hollow body portions (17, 18) (Fig. 4).

**Revendications**

1. Elément de liaison pour des conducteurs de courant (1, 2) isolé par un corps solide, à base d'un corps creux (6), isolant électrique, qui présente deux orifices d'introduction (8, 10) des conducteurs de courant dans lesquels sont introduits respectivement un conducteur de courant (1, 2) à l'intérieur du corps creux (6), une liaison de contact (5) conductrice de courant, qui relie électriquement les extrémités (3, 4) des conducteurs de courant et une protection (7) conductrice d'électricité, prévue sur la surface intérieure et qui est au potentiel des extrémités (3, 4) des conducteurs de courant, caractérisé en ce que:

a) le corps creux (6) est essentiellement rigide, comporte des orifices d'introduction (8, 10) des conducteurs de courant qui sont réalisés sous forme d'orifices de passage (8) traversés par le conducteur de courant (1) et/ou sont réalisés comme orifices d'introduction (10) avec un conducteur de courant (2) noyé solidement et au moins un orifice de montage (11) qui est muni d'un couvercle amovible (12) et peut être fermé de façon étanche électriquement par un joint d'étanchéité (13) et,
b) la liaison de contact (5) conductrice de courant est une liaison par la force ou une liaison par la matière (figure 1).

2. Elément de liaison selon la revendication 1, caractérisé en ce que pour des orifices d'introduction des conducteurs de courant réalisés sous la forme d'orifices de passage (8) entre le corps creux (6) et l'isolation par un corps solide des conducteurs de courant (1) il est prévu un compensateur (9), serré élastiquement et assurant l'étanchéité électrique.

3. Elément de liaison selon la revendication 1 ou 2, caractérisé en ce que les orifices d'introduction (8, 10) des conducteurs de courant sont prévus décalés axialement ou faisant un angle.

4. Elément de liaison selon l'une des revendications 1 à 3, caractérisé en ce que le corps creux (6), est réalisé pour des liaisons tri-dimensionnelles, sous la forme d'une partie de corps creux (17) et relié à rotation à au moins une autre partie de corps creux (18), un compensateur (19) élastique, assurant l'étanchéité électrique étant prévu entre les parties de corps creux adjacentes (17, 18) (figure 4).

5. Elément de liaison selon la revendication 4, caractérisé par deux parties de corps creux (17, 18) qui comportent respectivement un orifice de montage (11) rendu étanche de façon électrique par un couvercle (12) et un joint (13), et chaque fois l'un des conducteurs de courant (1, 2) est noyé solidement dans l'orifice d'introduction (10) de conducteurs de courant de l'une des parties de corps creux (17, 18) (figure 4).

Fig. 1

Fig. 2

Fig. 3

Fig. 4